(19) Europäisches Patentamt
European Patent Office
Office européen des brevets

(11) **EP 3 493 452 B1**

(12) **EUROPEAN PATENT SPECIFICATION**

(45) Date of publication and mention
of the grant of the patent:
**07.04.2021 Bulletin 2021/14**

(21) Application number: **17833561.8**

(22) Date of filing: **26.07.2017**

(51) Int Cl.:
**H04L 27/18** (2006.01)　　　**H04L 5/00** (2006.01)

(86) International application number:
**PCT/CN2017/094510**

(87) International publication number:
**WO 2018/019258 (01.02.2018 Gazette 2018/05)**

(54) **INFORMATION SENDING METHOD AND APPARATUS, AND RADIO ACCESS DEVICE**

VERFAHREN UND VORRICHTUNG ZUM SENDEN VON INFORMATIONEN UND
FUNKZUGANGSVORRICHTUNG

PROCÉDÉ ET APPAREIL D'ENVOI D'INFORMATIONS ET DISPOSITIF D'ACCÈS
RADIOÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2016 CN 201610599181**

(43) Date of publication of application:
**05.06.2019 Bulletin 2019/23**

(73) Proprietor: **Huawei Technologies Co., Ltd.
Longgang District
Shenzhen, Guangdong 518129 (CN)**

(72) Inventors:
• **WU, Tao
Shenzhen
Guangdong 518129 (CN)**
• **CHEN, Teyan
Shenzhen
Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**CN-A- 101 447 854　　CN-A- 101 447 854
US-A1- 2008 101 491　　US-A1- 2016 211 998**

Description

TECHNICAL FIELD

The present invention relates to the communications field, and more specifically, to an information sending method and apparatus, and a radio access device.

BACKGROUND

With rapid development of Internet technologies, more sensing devices such as a radio frequency identification device, a temperature sensor, a humidity sensor, and a barometric pressure sensor are integrated with the Internet to form the Internet of Things (Internet of Things, IoT for short). To enable a large quantity of sensing devices to be able to access the Internet flexibly, a radio communications system that supports multi-user access needs to be provided.
Because most sensing devices are low-power-consumption devices that are powered by a battery and are disposed in a relatively large area, most sensing devices are far away from a radio access device. This reduces a signal-to-noise ratio of a communication signal between the sensing devices and the radio access device. Therefore, the radio communications system needs to provide reliable information transmission in a transmission condition with a relatively low signal-to-noise ratio. The patent prior art document CN 101 447 854 A (and its English language equivalent US 2010/232348) discloses an information sending method, comprising generating, based on N symbol sequences that are in a first modulation scheme corresponding to users, N symbol sequences that are in a second modulation scheme and that are corresponding to the users, wherein N is an integer greater than 1, wherein the second modulation scheme is a higher order modulation scheme than the first modulation scheme; and separately sending the N symbol sequences in the second modulation scheme to users by using resource blocks that are respectively corresponding to the users. US 2008/0101491 A1 discloses another method for transmitting signals in a wireless communication system.

SUMMARY

The present invention provides a novel information sending method according to claim 1 and an apparatus according to claim 8, and may be used in a radio access device, so that information for each user can be repeatedly sent on subcarriers that have relatively wide spacings, and therefore, a frequency domain diversity gain can be obtained, and transmission performance for each user can be improved. Further advantageous embodiments and improvements are listed in the dependent claims. Hereinafter, before coming to a detailed description of the embodiments of the invention with reference to the attached drawings, some aspects of the invention which contribute to the understanding of the invention are listed below separately. However, it should be noted that the invention is defined by the attached claims and any embodiment or aspect which does not fall within the scope of these claims shall also be understood as an example or aspect contributing to the understanding of the invention.
According to a first aspect, an information sending method is provided, including: generating, based on N symbol sequences that are in a first modulation scheme and that are respectively corresponding to N users, N symbol sequences that are in a second modulation scheme and that are respectively corresponding to the N users, where N is an integer greater than 1, each symbol sequence in the second modulation scheme includes information about the N symbol sequences in the first modulation scheme, and the second modulation scheme is a higher order modulation scheme than the first modulation scheme; and separately sending the N symbol sequences in the second modulation scheme to the N users by using resource blocks that are respectively corresponding to the N users.
In the invention, N modulation symbols that are in the second modulation scheme and that are respectively corresponding to the N users may be generated by mixing $k^{th}$ modulation symbols in all symbol sequences in the first modulation scheme, where the N modulation symbols in the second modulation scheme are respectively the $k^{th}$ modulation symbols in the N symbol sequences in the second modulation scheme; and the N modulation symbols in the second modulation scheme may be respectively mapped to $k^{th}$ subcarriers in resource blocks that are corresponding to the N users for sending.
In some embodiments, the $k^{th}$ modulation symbols in all symbol sequences in the first modulation scheme may be mixed by multiplying a predetermined matrix by a matrix that is formed by the $k^{th}$ modulation symbols in all symbol sequences in the first modulation scheme. Herein, the first modulation scheme may be phase shift keying modulation (for example, BPSK or QPSK) or quadrature amplitude modulation (for example, 16QAM or 32QAM), and the quantity N of the users may be, for example, 2 or 3.
According to a second aspect, an information sending apparatus is provided, including: a mixing unit, configured to generate, based on N symbol sequences that are in a first modulation scheme and that are respectively corresponding to N users, N symbol sequences that are in a second modulation scheme and that are respectively corresponding to the N users, where N is an integer greater than 1, each symbol sequence in the second modulation scheme includes information about the N symbol sequences in the first modulation scheme, and the second modulation scheme is a higher order modulation scheme than the first modulation scheme; and a sending unit, configured to separately send the N symbol sequences in the second modulation scheme to the N users by using resource blocks that are respectively corresponding to the N users.

In the present invention, the mixing unit is configured to generate N modulation symbols that are in the second modulation scheme and that are respectively corresponding to the N users by mixing $k^{th}$ modulation symbols in all symbol sequences in the first modulation scheme, where the N modulation symbols in the second modulation scheme are respectively the $k^{th}$ modulation symbols in the N symbol sequences in the second modulation scheme; and the sending unit is configured to respectively map the N modulation symbols in the second modulation scheme to $k^{th}$ subcarriers in resource blocks that are corresponding to the N users for sending.

In some embodiments, the mixing unit is configured to mix the $k^{th}$ modulation symbols in all symbol sequences in the first modulation scheme by multiplying a predetermined matrix by a matrix that is formed by the $k^{th}$ modulation symbols in all symbol sequences in the first modulation scheme. Herein, the first modulation scheme may be phase shift keying modulation (for example, BPSK or QPSK) or quadrature amplitude modulation (for example, 16QAM or 32QAM), and the quantity N of the users may be, for example, 2 or 3.

According to a third aspect, a radio access device can be provided, including: a mixing unit, configured to generate, based on N symbol sequences that are in a first modulation scheme and that are respectively corresponding to N users, N symbol sequences that are in a second modulation scheme and that are respectively corresponding to the N users, where N is an integer greater than 1, each symbol sequence in the second modulation scheme includes information about the N symbol sequences in the first modulation scheme, and the second modulation scheme is a higher order modulation scheme than the first modulation scheme; and a sending unit, configured to separately send the N symbol sequences in the second modulation scheme to the N users by using resource blocks that are respectively corresponding to the N users.

In the invention, the mixing unit is configured to generate N modulation symbols that are in the second modulation scheme and that are respectively corresponding to the N users by mixing $k^{th}$ modulation symbols in all symbol sequences in the first modulation scheme, where the N modulation symbols in the second modulation scheme are respectively the $k^{th}$ modulation symbols in the N symbol sequences in the second modulation scheme; and the sending unit is configured to respectively map the N modulation symbols in the second modulation scheme to $k^{th}$ subcarriers in resource blocks that are corresponding to the N users for sending.

In some embodiments, the mixing unit is configured to mix the $k^{th}$ modulation symbols in all symbol sequences in the first modulation scheme by multiplying a predetermined matrix by a matrix that is formed by the $k^{th}$ modulation symbols in all symbol sequences in the first modulation scheme. Herein, the first modulation scheme may be phase shift keying modulation (for example, BPSK or QPSK) or quadrature amplitude modulation (for example, 16QAM or 32QAM), and the quantity N of the users may be, for example, 2 or 3.

According to a fifth aspect, a radio access device can be provided, including: a memory that stores a computer readable instruction; and a processor that can be operated when the computer readable instruction stored in the memory is executed, so as to implement the information sending method provided in the first aspect.

In the foregoing technical solutions, each of N symbol sequences S1'-SN' that are in a second modulation scheme and that are respectively corresponding to N users includes the information about N symbol sequences S1-SN that are in a first modulation scheme and that are respectively corresponding to the N users, and therefore, information that is respectively corresponding to the N users can be repeatedly sent on subcarriers that have relatively wide spacings. Therefore, a frequency domain diversity gain may be obtained, and transmission performance for each user can be improved.

## BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1a is a schematic diagram of an example process in which a conventional radio access device uses SQPSK modulation to send information to user 1 and user 2;

FIG. 1b is a schematic diagram of an example process in which a conventional radio access device uses 16-QAM DCM modulation to send information to user 1, user 2, and user 3;

FIG. 2 is a schematic flowchart of an information sending method according to an embodiment of the present invention;

FIG. 3 is a schematic block diagram of a processing process of application example 1 of an information sending method according to an embodiment of the present invention;

FIG. 4 is a schematic block diagram of a processing process of application example 2 of an information sending method according to an embodiment of the present invention;

FIG. 5 is a schematic block diagram of a processing process of application example 3 of an information sending method according to an embodiment of the present invention;

FIG. 6 is a schematic block diagram of an information sending apparatus according to an embodiment of the present invention;

FIG. 7 is a schematic block diagram of a radio access device according to an embodiment of the present invention; and

FIG. 8 is a structural diagram of an example hardware architecture of a computing device that can implement the information sending apparatus shown in FIG. 6 and at least a part of the radio access device shown in FIG. 7.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The following describes in detail features of various aspects and examples embodiments of the present invention. Many specific details are provided in the following detailed description, so as to provide a comprehensive understanding of the present invention. However, apparently, a person skilled in the art may implement the present invention without some of the specific details. The following embodiments are described only to provide a better understanding of the present invention by showing examples of the present invention.

At present, the example implementations are described comprehensively with reference to the accompanying drawings. However, the example implementation may be implemented in a plurality of forms, and it should not be understood as being limited to the example implementations described herein. Conversely, the implementations are provided to make the present invention more comprehensive and complete, and comprehensively convey the idea of the example implementations to a person skilled in the art. For the sake of clarity, a thickness of a region or a layer in figures may be exaggerated. A same reference numeral in the figures represents same or similar structures, and therefore detailed descriptions of the structures are omitted.

In addition, the described features, structure or property may be combined in one or more embodiments in any proper manner. In the following descriptions, many specific details are provided to give a comprehensive understanding of the embodiments of the present invention. However, a person skilled in the art should be aware that the technical solutions in the present invention may be implemented without one or more of the specific details, or another unit, elements, materials or the like may be used. In other cases, well-known structures, materials, or operations are not shown or described in detail, in order not to obscure the main technical idea of the present invention.

It should be noted that the embodiments of this application and features in the embodiments can be combined with each other provided that no conflicts occur. This application is described in detail in the following with reference to the accompanying drawings and the embodiments.

In an existing wireless local area network (Wireless local Access Network, WLAN for short) standard (for example, an 802.11ad standard) established by IEEE 802.11 standard organization and a new generation WLAN standard (for example, an 802.11ax standard) that has already been initiated by IEEE 802.11 standard organization, an orthogonal frequency division multiple access (Orthogonal Frequency Division Multiple Access, OFDMA for short) technology is used to resolve a problem of simultaneous access of a plurality of users, and a dual carrier modulation (Dual Carrier Modulation, DCM for short) technology is used to enhance performance of two modulation schemes that are applicable to a transmission condition with a relatively low signal-to-noise ratio: binary phase shift keying (Binary Phase Shift Keying, BPSK for short) modulation and quadrature phase shift keying (Quadrature Phase Shift Keying, QPSK for short) modulation.

To be simple, the DCM is a technology that uses a higher order modulation scheme than the original modulation scheme (for example, the QPSK modulation is used when an original modulation scheme is the BPSK modulation) to obtain a capability of repeatedly sending information in frequency domain, and obtain a frequency domain diversity gain by using subcarriers that have relatively wide spacings to repeatedly send the information, so as to enhance performance of the original modulation scheme.

DCM that is used to enhance the performance of the BPSK modulation scheme is referred to as spread quadrature phase shift keying (Spread QPSK, SQPSK for short) modulation, and specific processing of the SQPSK DCM is as follows: A coded bit sequence $c_0, c_1, \ldots c_{N_{CBPS}}$ corresponding to an Orthogonal Frequency Division Multiplexing (Orthogonal Frequency Division Multiplexing, OFDM for short) symbol is divided into a plurality of bit pairs, each bit pair includes two neighboring bits ($c_{2k}, c_{2k+1}$), where $N_{CBPS}$ is a sum of bits of the coded bit sequence corresponding to the OFDM symbol, and $k = 0, 1, ..., \dfrac{N_{CBPS} - 1}{2}$; each bit forms a QPSK constellation point according to a form of

$$d_k = \frac{1}{\sqrt{2}}\left((2c_{2k} - 1) + j(2c_{2k+1} - 1)\right),$$

and the QPSK constellation point is mapped to a first half part of the subcarrier of the OFDM symbol; each bit forms the QPSK constellation point according to a form of

$$d_k = \frac{1}{\sqrt{2}}\left((2c_{2k} - 1) + j(2c_{2k+1} - 1)\right),$$

and the QPSK constellation point is mapped to a second half part of the subcarrier of the OFDM symbol.

DCM that is used to enhance the performance of the QPSK modulation scheme is referred to as 16-QAM DCM, and specific processing of the 16-QAM DCM is as follows: A coded bit sequence $c_0, c_1, ...c_{N_{CBPS}}$ corresponding to an OFDM symbol is divided into a plurality of bit groups, each bit group includes four neighboring bits ($c_{4k}, c_{4k+1}, c_{4k+2}, c_{4k+3}$), where the $N_{CBPS}$ is the sum of bits of the coded bit sequence corresponding to the OFDM symbol, and

$$k = 0, 1, ..., \frac{N_{CBPS} - 3}{4};$$ each bit pair forms a pair of the QPSK constellation points ($x_{2k}, x_{2k+1}$) according to forms

of $x_{2k} = \dfrac{1}{\sqrt{2}}\left((2c_{4k} - 1) + j(2c_{4k+2} - 1)\right)$ and $x_{2k+1} = \dfrac{1}{\sqrt{2}}\left((2c_{4k+1} - 1) + j(2c_{4k+3} - 1)\right)$; based on each pair of the QPSK constellation points ($x_{2k}, x_{2k+1}$), two quadrature amplitude modulation (Quadrature Amplitude Modulation, 16-QAM for short) constellation points are obtained based on $\begin{bmatrix} d_k \\ d_k' \end{bmatrix} = Q \begin{bmatrix} x_{2k} \\ x_{2k+1} \end{bmatrix}$, where $Q = \dfrac{1}{\sqrt{5}}\begin{bmatrix} 1 & 2 \\ -2 & 1 \end{bmatrix}$, and the

16-QAM constellation points $d_k$ and $d_k'$ are respectively mapped to the first half part of the subcarrier and the second half part of the subcarrier of the OFDM symbol.

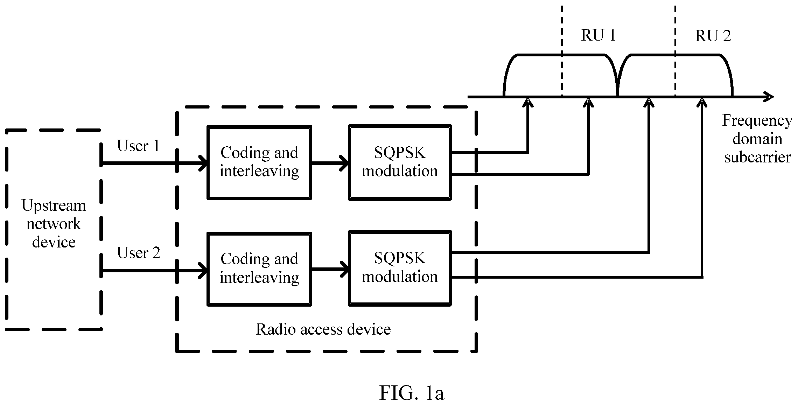

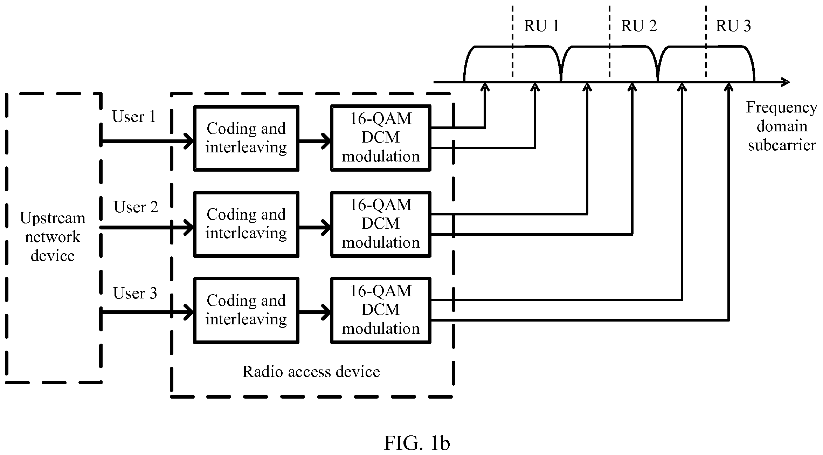

FIG. 1a is a schematic diagram of an example process in which a conventional radio access device uses the SQPSK modulation to send information to user 1 and user 2. FIG. 1b is a schematic diagram of an example process in which the conventional radio access device uses the 16-QAM DCM modulation to send information to user 1, user 2, and user 3. It can be learned from FIG. 1a and FIG. 1b that, in a multi-user access scenario, a radio access device receives information of each user from an upstream network device, and separately performs coding, interleaving, and DCM modulation on information of the users, and respectively maps modulation symbols obtained through modulation to the subcarriers of resource blocks (Resource Unit, RU for short) that are corresponding to the users, so as to send the information to the users.

Various DCM technologies, including the SQPSK DCM and 16-QAM DCM mentioned above, can effectively provide the frequency domain diversity gain in a scenario in which a single user obtains higher transmission bandwidth, thereby improving transmission performance for the user. However, in a scenario of the Internet of Things mentioned above, a large quantity of sensing devices need to synchronously access the radio access device, and each sensing device needs only relatively low transmission bandwidth. In this case, if an OFDMA multiplexing scheme is used to allocate a relatively small resource block to each sensing device, the DCM technology cannot repeatedly send the information by using the subcarriers that have relatively wide spacings, and consequently, the frequency domain diversity gain cannot be obtained, and the transmission performance for each sensing device cannot be improved. Although the frequency domain diversity gain may be obtained by the DCM technology in the scenario of the Internet of Things by allocating a relatively larger RU to each sensing device, this greatly reduces spectral efficiency of a radio communications system.

In view of the foregoing cases, the present invention provides a novel information sending method and apparatus, and a radio access device, so that information for each user can be repeatedly sent on subcarriers that have relatively wide spacings, so that the frequency domain diversity gain can be obtained, and the transmission performance for each user can be improved.

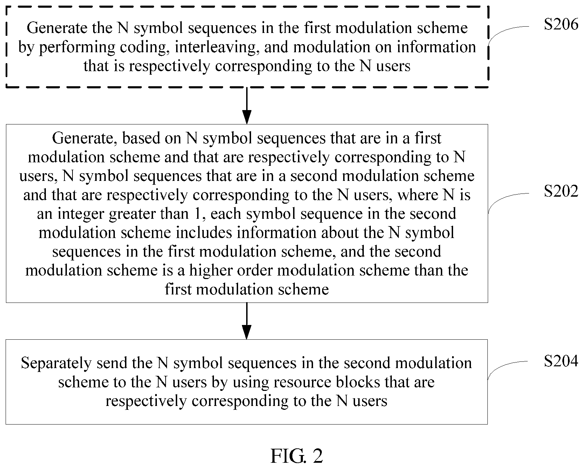

FIG. 2 is a schematic flowchart of an information sending method according to an embodiment of the present invention. As shown in FIG. 2, the information sending method according to this embodiment of the present invention includes: S202. Generating, based on N symbol sequences S1-SN that are in a first modulation scheme and that are respectively corresponding to N users, N symbol sequences S1'-SN' that are in a second modulation scheme and that are respectively corresponding to the N users; and S204. Separately sending the N symbol sequences S1'-SN' in the second modulation scheme to the N users by using resource blocks that are respectively corresponding to the N users. Herein, N is an integer greater than 1, each of the N symbol sequences S1'-SN' in the second modulation scheme includes information about the N symbol sequences S1-SN in the first modulation scheme, and the second modulation scheme is a higher order modulation scheme than the first modulation scheme.

In the information sending method described with reference to FIG. 2, each of the N symbol sequences S1'-SN' that are in the second modulation scheme and that are respectively corresponding to the N users includes the information about the N symbol sequences S1-SN that are in the first modulation scheme and that are respectively corresponding to the N users, and therefore, information that is respectively corresponding to the N users can be repeatedly sent on subcarriers that have relatively wide spacings. Therefore, a frequency domain diversity gain may be obtained, and transmission performance for each user can be improved.

In some embodiments, the information sending method according to this embodiment of the present invention may further include: S206. Generating the N symbol sequences S1-SN that are in the first modulation scheme and that are respectively corresponding to the N users by performing coding, interleaving, and modulation on information that is respectively corresponding to the N users, that is, the information that is sent to the N users. Specifically, N information bit sequences C1-CN that are respectively corresponding to the N users may be generated by performing coding and interleaving on the information that is respectively corresponding to the N users; and the N symbol sequences S1-SN that are in the first modulation scheme and that are respectively corresponding to the N users may be generated by modulating the N information bit sequences C1-CN that are respectively corresponding to the N users. A person skilled in the art should understand that coding and interleaving may be performed by using various coding methods and interleaving methods that are known in the art or that will be developed in the future. Therefore, the specific coding method and interleaving method are not limited herein.

In some embodiments, a modulation scheme that is applicable to an OFDM transmission scheme, for example, phase shift keying modulation such as BPSK modulation, QPSK modulation, or quadrature amplitude modulation such as 16-QAM, 32-QAM, or the like, may be used to modulate the N information bit sequences C1-CN that are respectively corresponding to the N users, so that the information sending method according to this embodiment of the present invention is compatible with various standards that have been established and various standards that will be established in the future. In this way, the information sending method according to this embodiment of the present invention may effectively improve, for example, the transmission performance between the foregoing sensing device and radio access device. Herein, it should be noted that the N information bit sequences C1-CN that are respectively corresponding to the N users are usually modulated using a same modulation scheme; however, in some cases, the N information bit sequences C1-CN that are respectively corresponding to the N users may also be modulated using different modulation schemes, provided that a same quantity of modulation symbols can be obtained by using these different modulation schemes.

In some embodiments, step S202 may include: generating N modulation symbols $s_1'(k),\ s_2'(k),\ ...,\ s_N'(k)$ that are in the second modulation scheme and that are respectively corresponding to the N users by mixing $k^{th}$ modulation symbols $s_1(k), s_2(k),..., s_N(k)$ in all the N symbol sequences S1-SN that are in the first modulation scheme and that are respectively corresponding to the N users. Herein, k is an integer greater than 0 and less than or equal to M, and M is a quantity of the modulation symbols in each of the N symbol sequences S1-SN that are in the first modulation scheme and that are respectively corresponding to the N users, and each of the N modulation symbols $s_1'(k), s_2'(k),..., s_N'(k)$ in the second modulation scheme includes the information about the $k^{th}$ modulation symbols $s_1(k), s_2(k),..., s_N(k)$ in each of the N symbol sequences S1-SN that are in the first modulation scheme and that are respectively corresponding to the N users. The N modulation symbols $s_1'(k), s_2'(k),..., s_N'(k)$ that are in the second modulation scheme and that are respectively corresponding to the N users are respectively the $k^{th}$ modulation symbols in the N symbol sequences S1'-SN' that are in the second modulation scheme and that are respectively corresponding to the N users.

In some embodiments, step S204 may include: respectively mapping the N modulation symbols that are in the second modulation scheme and that are corresponding to the N users to $k^{th}$ subcarriers of RUs that are corresponding to the N users (that is, $k^{th}$ subcarriers of RUs that are allocated to the N users) for sending.

In some embodiments, a matrix multiplication method may be used to mix the $k^{th}$ modulation symbols $s_1(k), s_2(k),..., s_N(k)$ in each of the N symbol sequences S1-SN that are in the first modulation scheme and that are respectively corresponding to the N users, that is, a predetermined matrix is multiplied by a matrix that is formed by the $k^{th}$ modulation symbols $s_1(k), s_2(k),..., s_N(k)$ in each of the N symbol sequences S1-SN in the first modulation scheme.

For example, based on a predetermined matrix Q and the matrix that is formed by the $k^{th}$ modulation symbols $s_1(k),s_2(k),...,s_N(k)$ in the N symbol sequences S1-SN that are in the first modulation scheme and that are respectively corresponding to the N users, the N modulation symbols $s_1^{'}(k), s_2^{'}(k),...,s_N^{'}(k)$ that are in the second modulation scheme and that are respectively corresponding to the N users are obtained according to the following equation (1), where the predetermined matrix Q may be determined based on the quantity N of the users and the modulation scheme that is used to modulate the N information bit sequences C1-CN, that is, the first modulation scheme.

$$\begin{bmatrix} s_1^{'}(k) \\ s_2^{'}(k) \\ \vdots \\ s_N^{'}(k) \end{bmatrix} = Q \begin{bmatrix} s_1(k) \\ s_2(k) \\ \vdots \\ s_N(k) \end{bmatrix} \qquad \text{Equation (1)}$$

A person skilled in the art should understand that the foregoing has described use of the matrix multiplication method to mix the $k^{th}$ modulation symbols $s_1(k),s_2(k),..., s_N(k)$ in each of the N symbol sequences S1-SN that are in the first modulation scheme and that are respectively corresponding to the N users, but a mixing method for performing mixing on these modulation symbols in the first modulation scheme is not limited to the matrix multiplication method, and various mixing methods that are known in the art or that will be developed in the future may be used to perform mixing, provided that these mixing methods enable each modulation symbol in the second modulation scheme to include the information about all the modulation symbols in the first modulation scheme that are used for mixing.

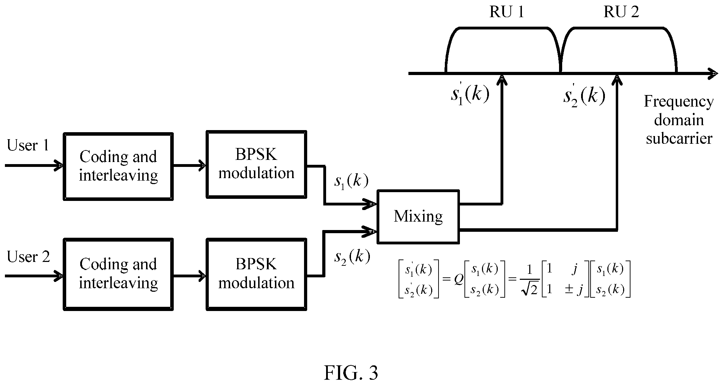

The following further describes an information sending method according to an embodiment of the present invention with reference to an example. FIG. 3 to FIG. 5 are schematic block diagrams of processing processes of application examples 1 to 3 of the information sending method according to this embodiment of the present invention. Specifically:

In application example 1 shown in FIG. 3, a quantity N of users is 2, and a modulation scheme that is used to modulate information bit sequences that are respectively corresponding to two users is BPSK modulation. As shown in FIG. 3, after coding, interleaving, and the BPSK modulation are separately performed on information that is sent to user 1 and user 2, that is, the information that is corresponding to the user 1 and the user 2, BPSK symbols $s_1(k)$ and $s_2(k)$, that is, modulation symbols that are in a first modulation scheme and that are respectively corresponding to the user 1 and the user 2, may be obtained, where k represents a $k^{th}$ BPSK symbol; two QPSK symbols $s_1^{'}(k)$ and $s_2^{'}(k)$, that is, the modulation symbols that are in a second modulation scheme and that are respectively corresponding to the user 1 and the user 2, may be obtained by mixing the BPSK symbols $s_1(k)$ and $s_2(k)$ according to the following equitation (2); and the QPSK symbol $s_1^{'}(k)$ is mapped to a $k^{th}$ subcarrier in RU 1 that is corresponding to the user 1 for sending, and the QPSK symbol $s_2^{'}(k)$ is mapped to a $k^{th}$ subcarrier in RU 2 that is corresponding to the user 2 for sending.

$$\begin{bmatrix} s_1^{'}(k) \\ s_2^{'}(k) \end{bmatrix} = Q \begin{bmatrix} s_1(k) \\ s_2(k) \end{bmatrix} = \frac{1}{\sqrt{2}} \begin{bmatrix} 1 & j \\ 1 & \pm j \end{bmatrix} \begin{bmatrix} s_1(k) \\ s_2(k) \end{bmatrix} \qquad \text{Equation (2)}$$

That is,

$$s_1{'}(k) = \frac{1}{\sqrt{2}} \left( (2s_1(k) - 1) + j(2s_2(k) - 1) \right)$$

$$s_2{'}(k) = \frac{1}{\sqrt{2}} \left( (2s_1(k) - 1) - j(2s_2(k) - 1) \right)$$

Herein, for the purpose of description, the foregoing matrix $\frac{1}{\sqrt{2}}\begin{bmatrix} 1 & j \\ 1 & \pm j \end{bmatrix}$ that is used to enhance performance of the BPSK modulation scheme in a DCM technology is used as a predetermined matrix Q.

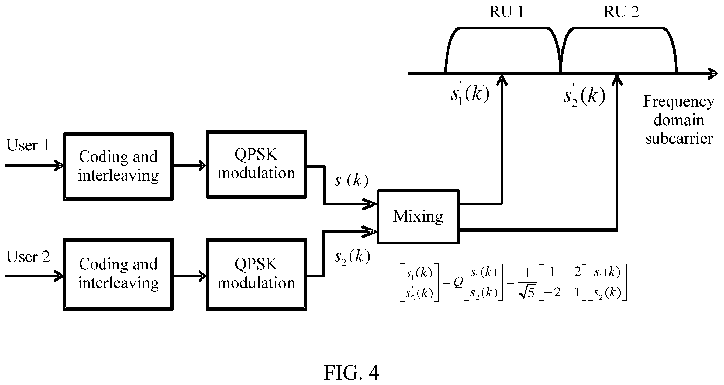

In application example 2 shown in FIG. 4, a quantity N of users is 2, and a modulation scheme that is used to modulate information bit sequences that are respectively corresponding to two users is QPSK modulation. As shown in FIG. 4, after coding, interleaving, and the QPSK modulation are separately performed on information that is sent to user 1 and user 2, that is, the information that is corresponding to the user 1 and the user 2, QPSK symbols $s_1(k)$ and $s_2(k)$, that is, modulation symbols that are in a first modulation scheme that are respectively corresponding to the user 1 and the user 2, may be obtained, where k represents a $k^{th}$ QPSK symbol; two 16-QAM symbols $s_1^{'}(k)$ and $s_2^{'}(k)$, that is, the modulation symbols that are in a second modulation scheme and that are respectively corresponding to the user 1 and the user 2, may be obtained by mixing the QPSK symbols $s_1(k)$ and $s_2(k)$ according to the following equitation (3); and the 16-QAM symbol $s_1^{'}(k)$ is mapped to a $k^{th}$ subcarrier in RU 1 that is corresponding to the user 1 for sending, and the 16-QAM symbol $s_2^{'}(k)$ is mapped to a $k^{th}$ subcarrier in RU 2 that is corresponding to the user 2 for sending.

$$\begin{bmatrix} s_1^{'}(k) \\ s_2^{'}(k) \end{bmatrix} = Q \begin{bmatrix} s_1(k) \\ s_2(k) \end{bmatrix} = \frac{1}{\sqrt{5}} \begin{bmatrix} 1 & 2 \\ -2 & 1 \end{bmatrix} \begin{bmatrix} s_1(k) \\ s_2(k) \end{bmatrix} \qquad \text{Equation (3)}$$

Similarly, for the purpose of description, the foregoing matrix $\frac{1}{\sqrt{5}}\begin{bmatrix} 1 & 2 \\ -2 & 1 \end{bmatrix}$ that is used to enhance performance of a QPSK modulation scheme in a DCM technology is used as a predetermined matrix Q.

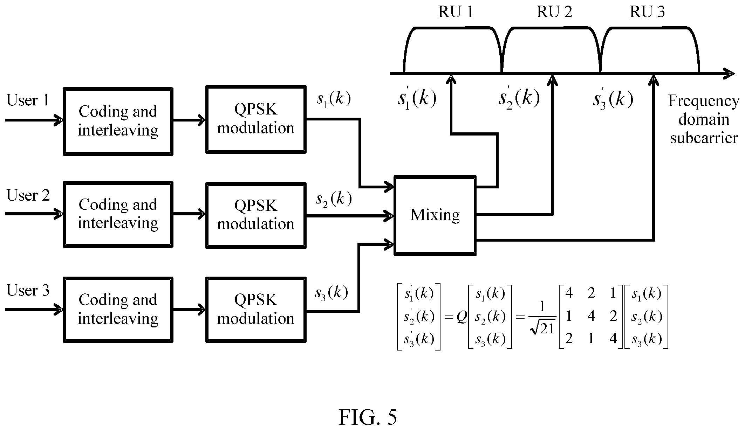

In application example 3 shown in FIG. 5, a quantity N of users is 3, and a modulation scheme that is used to modulate information bit sequences that are respectively corresponding to three users is QPSK modulation. As shown in FIG. 5, after coding, interleaving, and QPSK modulation are separately performed on information that is sent to user 1, user 2, and user 3, that is, the information that is corresponding to the user 1, the user 2, and the user 3, QPSK symbols $s_1(k)$, $s_2(k)$, and $s_3(k)$, that is, modulation symbols that are in a first modulation scheme and that are respectively corresponding to the user 1, the user 2, and the user 3, may be obtained, where k represents a $k^{th}$ QPSK symbol; three 64-QAM symbols $s_1(k)$, $s_2(k)$ and $s_3(k)$, that is, the modulation symbols that are in a second modulation scheme and that are respectively corresponding to the user 1, the user 2, and the user 3, may be obtained by mixing the QPSK symbols $s_1(k)$, $s_2(k)$, and $s_3(k)$ according to the following equitation (4); and the 64-QAM symbol $s_1^{'}(k)$ is mapped to a $k^{th}$ subcarrier in RU 1 that is corresponding to the user 1 for sending, the 64-QAM symbol $s_2^{'}(k)$ is mapped to a $k^{th}$ subcarrier in RU 2 that is corresponding to the user 2 for sending, and the 64-QAM symbol $s_3^{'}(k)$ is mapped to a $k^{th}$ subcarrier in RU 3 that is corresponding to the user 3 for sending.

$$\begin{bmatrix} s_1^{'}(k) \\ s_2^{'}(k) \\ s_3^{'}(k) \end{bmatrix} = Q \begin{bmatrix} s_1(k) \\ s_2(k) \\ s_3(k) \end{bmatrix} = \frac{1}{\sqrt{21}} \begin{bmatrix} 4 & 2 & 1 \\ 1 & 4 & 2 \\ 2 & 1 & 4 \end{bmatrix} \begin{bmatrix} s_1(k) \\ s_2(k) \\ s_3(k) \end{bmatrix} \qquad \text{Equation (4)}$$

Herein, when a predetermined matrix Q is determined, in addition to the quantity N of the users, and the modulation scheme that is used to modulate the information of each user, that is, in addition to the first modulation scheme, the following factors further need to be considered: The N modulation symbols in the second modulation scheme need to be modulation symbols that are in one-to-one correspondences with matrices that are formed by the N modulation symbols in the first modulation scheme, that is, a modulation symbol in the second modulation scheme corresponds to only one group of N modulation symbols in the first modulation scheme, or each modulation symbol in the second modulation scheme need to include the information about all the modulation symbols that are in the first modulation scheme and that are used to generate the modulation symbols in the second modulation scheme.

An example 3 is used as an example, and each row of the predetermined matrix Q includes three elements 4, 2, and 1, so as to ensure that the obtained modulation symbols $s_1^{'}(k)$, $s_2^{'}(k)$, and $s_3^{'}(k)$ in the second modulation schemes are respectively corresponding to only one group of QPSK symbols $s_1^{'}(k)$, $s_2^{'}(k)$, and $s_3^{'}(k)$. If the three elements in each row in the predetermined matrix Q are 3, 2, and 1, for example, $s_1^{'}(k) = 3s_1(k) + 2s_2(k) + s_3(k)$, when $s_1(k) = \frac{1}{\sqrt{2}} + j\frac{1}{\sqrt{2}}$ and $s_2(k) = s_3(k) = -\frac{1}{\sqrt{2}} - j\frac{1}{\sqrt{2}}$, $s_1^{'}(k) = 0$; and at the same time, when $s_1(k) = -\frac{1}{\sqrt{2}} - j\frac{1}{\sqrt{2}}$ and $s_2(k) = s_3(k) = \frac{1}{\sqrt{2}} + j\frac{1}{\sqrt{2}}$, $s_1^{'}(k) = 0$. Therefore, the modulation symbol $s_1^{'}(k) = 0$ in the second modulation scheme is not corresponding to only one group of QPSK symbols. Therefore, the predetermined matrix Q that uses 3, 2, and 1 as the elements cannot be used to mix the QPSK symbols $s_1^{'}(k)$, $s_2^{'}(k)$, and $s_3^{'}(k)$.

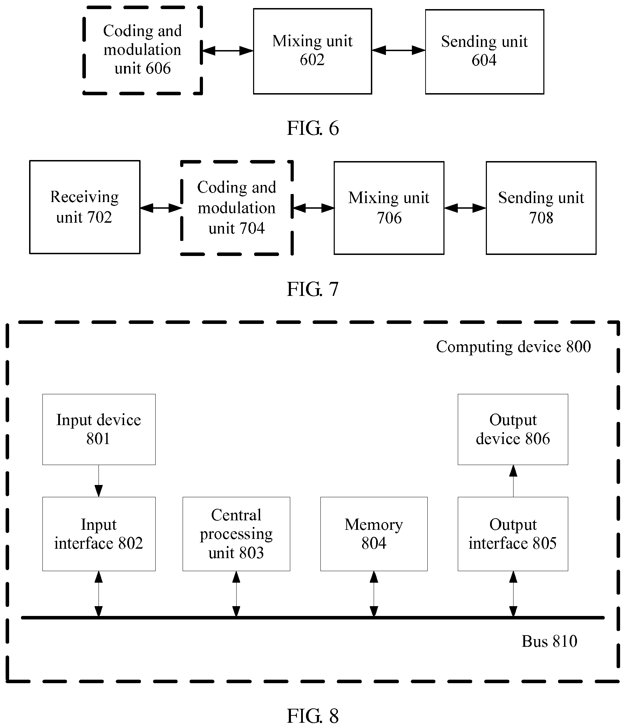

The following describes in detail an information processing apparatus and a radio access device according to embodiments of the present invention with reference to FIG. 6 and FIG. 7.

FIG. 6 is a schematic block diagram of an information sending apparatus according to an embodiment of the present invention. As shown in FIG. 6, an information sending apparatus 600 according to this embodiment of the present invention includes a mixing unit 602 and a sending unit 604. The mixing unit 602 is configured to generate, based on N symbol sequences S1-SN that are in a first modulation scheme and that are respectively corresponding to N users, N symbol sequences S1'-SN' that are in a second modulation scheme and that are respectively corresponding to the N users, that is, to perform step S202. The sending unit 604 is configured to separately send the N symbol sequences S1'-SN' in the second modulation scheme to the N users by using resource blocks that are respectively corresponding to the N users, that is, to perform step S204. Herein, N is an integer greater than 1, each of the N symbol sequences S1'-SN' in the second modulation scheme includes information about the N symbol sequences S1-SN in the first modulation scheme, and the second modulation scheme is a higher order modulation scheme than the first modulation scheme.

In some embodiments, the information sending apparatus 600 according to this embodiment of the present invention may further include a coding and modulation unit 606. The coding and modulation unit is configured to generate the N symbol sequences S1-SN that are in the first modulation scheme and that are respectively corresponding to the N users by performing coding, interleaving, and modulation on information that is respectively corresponding to the N users, that is, the information that is sent to the N users, that is, to perform step S206. Specifically, the coding and modulation unit 606 may generate N information bit sequences C1-CN that are respectively corresponding to the N users by performing coding and interleaving on information that is respectively corresponding to the N users, that is, the information that is sent to the N users; and generate the N symbol sequences S1-SN that are in the first modulation scheme and that are respectively corresponding to the N users by performing modulation on the N information bit sequences C1-CN that are respectively corresponding to the N users. A person skilled in the art should understand that the coding and modulation unit 606 may use various coding methods and interleaving methods that are known in the art or that will be developed in the future, and a specific coding method and interleaving method used by the coding and modulation unit 606 are not limited herein.

In some embodiments, the mixing unit 602 may generate N modulation symbols $s_1(k), s_2(k), ..., s_N(k)$ that are in the second modulation scheme and that are respectively corresponding to the N users by mixing $k^{th}$ modulation symbols $s_1^{'}(k), s_2^{'}(k), ..., s_N^{'}(k)$ in all the N symbol sequences S1-SN in the first modulation scheme. Herein, k is an integer greater than 0 and less than or equal to M, and M is a quantity of the modulation symbols in each of the N symbol sequences S1-SN in the first modulation scheme, and each of the N modulation symbols $s_1^{'}(k), s_2^{'}(k), ..., s_N^{'}(k)$ in the second modulation scheme includes the information about the $k^{th}$ modulation symbols $s_1(k)(k), s_2(k), ..., s_N(k)$ in each of the N symbol sequences S1-SN in the first modulation scheme. The N modulation symbols $s_1^{'}(k), s_2^{'}(k),..., s_N^{'}(k)$ in the second modulation scheme are respectively the $k^{th}$ modulation symbols in the N symbol sequences S1'-SN' in the second modulation scheme.

In some embodiments, the sending unit 704 may respectively map the N modulation symbols $s_1^{'}(k), s_2^{'}(k),..., s_N^{'}(k)$ in the second modulation scheme to $k^{th}$ subcarriers in the resource blocks that are corresponding to the N users for sending.

In some embodiments, the coding and modulation unit 606 may use a modulation scheme that is applicable to an OFDM transmission scheme, for example, phase shift keying modulation such as BPSK modulation, QPSK modulation, or quadrature amplitude modulation such as 16-QAM, 32-QAM, or the like, to modulate the N information bit sequences C1-CN that are respectively corresponding to the N users; and the mixing unit 604 may mix the $k^{th}$ modulation symbols $s_1(k)(k), s_2(k),..., s_N(k)$ in each of the N symbol sequences S1-SN that are in the first modulation scheme and that are respectively corresponding to the N users by using the foregoing various mixing methods. For example, the mixing unit 602 may determine a predetermined matrix Q based on the quantity N of the users, and a modulation scheme that is used to modulate the N information bit sequences C1-CN that are respectively corresponding to the N users, that is, the first modulation scheme; and multiply the predetermined matrix Q by a matrix that is formed by the $k^{th}$ modulation symbols $s_1(k), s_2(k),..., s_N(k)$ in each of the N symbol sequences S1-SN that are in the first modulation scheme and that are respectively corresponding to the N users, that is, perform a matrix multiplication operation of the equitation (1), so as to generate the N modulation symbols $s_1^{'}(k), s_2^{'}(k),..., s_N^{'}(k)$ that are in the second modulation scheme and that are respectively corresponding to the N users.

Herein, to avoid unnecessary repetition, other details about modulation of the N information bit sequences C1-CN and mixing of the $k^{th}$ modulation symbols $s_1(k), s_2(k),..., s_N(k)$ in each of the N symbol sequences S1-SN in the first modulation scheme are not described again. For details, refer to the content described with reference to FIG. 2 to FIG. 5.

In the information sending apparatus according to this embodiment of the present invention, each symbol sequence of the N symbol sequences S1'-SN' in the second modulation scheme, generated by the mixing unit 602 mixing the N symbol sequences S1-SN that are in the first modulation scheme and that are respectively corresponding to the N users, includes the information that are respectively corresponding to the N users, that is, the information that is to be sent to the N users, and therefore, the sending unit 604 can repeatedly send the information that is respectively corresponding to the N users on subcarriers that have relatively wide spacings. Therefore, the information sending apparatus according to this embodiment of the present invention may obtain a frequency domain diversity gain and improve transmission performance for each user.

FIG. 7 is a schematic block diagram of a radio access device according to an embodiment of the present invention. As shown in FIG. 7, a radio access device 700 according to this embodiment of the present invention includes a receiving unit 702, a coding and modulation unit 704, a mixing unit 706, and a sending unit 708. The receiving unit 702 is configured to receive, from an upstream network device, information that is respectively corresponding to N users, that is, the information that is sent to the N users, through radio communications and/or wired communications. The coding and modulation unit 704 is configured to generate N symbol sequences S1-SN that are in first modulation scheme and that are respectively corresponding to the N users by performing coding, interleaving, and modulation on the information that is respectively corresponding to the N users, that is, to perform step S206. The mixing unit 706 is configured to generate, based on the N symbol sequences S1-SN that are in the first modulation scheme and that are respectively corresponding to the N users, N symbol sequences S1'-SN' that are in the second modulation scheme and that are respectively corresponding to the N users, that is, to perform step S202. The sending unit 708 is configured to separately send the N symbol sequences S1'-SN' in the second modulation scheme to the N users by using resource blocks that are respectively corresponding to the N users, that is, to perform step S204. Herein, N is an integer greater than 1, each of the N symbol sequences S1'-SN' in the second modulation scheme includes information about the N symbol sequences in the first modulation scheme, and the second modulation scheme is a higher order modulation scheme than the first modulation scheme.

It should be noted that function units that are in the radio access device 700 shown in FIG. 7 and that are related to improvement of transmission performance for each user mainly include the mixing unit 706 and the sending unit 708. More specifically, each of the N symbol sequences S1'-SN' in the second modulation scheme that are generated by the mixing unit 706 by mixing the N symbol sequences S1-SN that are in the first modulation scheme and that are respectively corresponding to the N users includes information about the N symbol sequences S1-SN that are in the first modulation scheme and that are respectively corresponding to the N users, and therefore, the sending unit 708 can repeatedly send the information that is respectively corresponding to the N users on subcarriers that have relatively wide spacings. Therefore, the radio access device according to this embodiment of the present invention may obtain a frequency domain diversity gain and improve the transmission performance for each user.

In other words, the radio access device 700 may alternatively not include the coding and modulation unit 704. In this case, the receiving unit 702 may be configured to receive, from the upstream network device, the N symbol sequences S1-SN that are in the first modulation scheme and that are respectively corresponding to the N users.

Herein, it should be noted that other content of the radio access device 700 is similar to related content of the information sending apparatus 600 described with reference to FIG. 6. Therefore, details are not described herein again. The radio access device 700 may be any device that can provide radio access to a user, such as a radio access point (Access Point, AP for short), an eNode B (eNode B), a home eNodeB (Home eNode B), a wireless transceiver, or the like in a WLAN.

The information sending apparatus 600 described with reference to FIG. 6, and at least a part of the radio access device 700 described with reference to FIG. 7 may be implemented by a computing device. FIG. 8 is a structural diagram of an example hardware architecture of the computing device that can implement an information sending apparatus and at least a part of a radio access device according to an embodiment of the present invention. As shown in FIG. 8, a computing device 800 includes an input device 801, an input interface 802, a central processing unit 803, a memory 804, an output interface 805, and an output device 806. The input interface 802, the central processing unit 803, the memory 804, and the output interface 805 are connected to each other by using a bus 810. The input device 801 and the output device 806 are connected to the bus 810 by respectively using the input interface 802 and the output interface 805, and are further connected to another component of the computing device 800. Specifically, the input device 801 receives input information from outside, and transmits the input information to the central processing unit 803 by using the input interface 802. The central processing unit 803 processes, based on a computer executable instruction stored in the memory 804, the input information to generate output information, and stores the output information in the memory 804 temporarily or permanently, and then transmits the output information to the output device 806 by using the output interface 805. The output device 806 outputs the output information to outside of the computing device 800.

When the information sending apparatus 600 described with reference to FIG. 6 or the radio access device 700 described with reference to FIG. 7 is implemented by using the computing device 800 shown in FIG. 8, the input device 801 receives information that is respectively corresponding to N users or symbol sequences S1-SN in a first modulation scheme from the outside, and transmits the information that is respectively corresponding to the N users or the symbol sequences S1-SN in the first modulation scheme to the central processing unit 803 by using the input interface 802. The central processing unit 803 processes, based on the computer executable instruction stored in the memory 804, the information that is respectively corresponding to the N users or the symbol sequences S1-SN in the first modulation scheme to generate N symbol sequences S1'-SN' that are in a second modulation scheme and that are respectively corresponding to the N users, stores the N symbol sequences S1'-SN' that are in the second modulation scheme and that are respectively corresponding to the N users in the memory 804 temporarily or permanently, and then sends, by using the output interface 805 and the output device 806, the N symbol sequences S1'-SN' in the second modulation scheme to the N users by using resource blocks that are respectively corresponding to the N users. Herein, the input device 801 may serve as a receiving unit 702 of a radio access device 700, and the input device 801 and the output device 806 may be a communications interface or an antenna that can communicate with the outside through wired communications or radio communications.

That is, the information sending apparatus 600 shown in FIG. 6 may also be implemented to include: a memory that stores the computer executable instruction; and a processor, where when the processor executes the computer executable instruction, the information sending method described with reference to FIG. 2 to FIG. 5 may be implemented. Herein, the information sending apparatus 600 may further include a communications interface, so as to receive, from the outside, the information corresponding to the N users or the symbol sequence in the first modulation scheme, in this case, the processor may implement, by executing the computer executable instruction stored in the memory, the information sending apparatus 600 described in FIG. 6 or the information sending method described with reference to FIG. 2 to FIG. 5.

Similarly, the radio access device 700 shown in FIG. 7 may also be implemented to include: a memory that stores the computer executable instruction; and a processor, where when the processor executes the computer executable instruction, the information sending method described with reference to FIG. 2 to FIG. 5, or the radio access device described with reference to FIG. 7 may be implemented. Herein, the receiving unit 702 of the radio access device 700 may be implemented as, for example, an antenna to receive, from the outside, the information that is respectively corresponding to the N users or the symbol sequence in the first modulation scheme, and in this case, the processor may implement, by executing the computer executable instruction stored in the memory, the radio access device 700 described with reference to FIG. 7, or the information sending method described with reference to FIG. 2 to FIG. 5.

It should be clear that the present invention is not limited to the particular configuration and processing that are described above and shown in the figures. In addition, for brevity, detailed descriptions of the known method technology are omitted herein. In the foregoing embodiments, some specific steps are described and shown as examples.

A person of ordinary skill in the art may be aware that the units and steps in the examples described with reference to the embodiments disclosed herein may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, function units in the embodiments of the present invention may be integrated into one processing unit, or each of the units may exist alone physically, or two or more units are integrated into one unit. The integrated unit may be implemented in a form of hardware, or may be implemented in a form of a software function unit.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An information sending method, comprising:

   a) generating (S206, S202), based on N symbol sequences that are in a first modulation scheme and that are respectively corresponding to N users, N symbol sequences that are in a second modulation scheme and that are respectively corresponding to the N users, wherein N is an integer greater than 1, each symbol sequence in the second modulation scheme comprises information about the N symbol sequences in the first modulation scheme, and the second modulation scheme is a higher order modulation scheme than the first modulation scheme; and
   b) separately sending (S204) the N symbol sequences in the second modulation scheme to the N users by using resource blocks that are respectively corresponding to the N users; and
   c) wherein processing of the generating, based on N symbol sequences that are in a first modulation scheme, N symbol sequences that are in a second modulation scheme comprises:

      c1) generating N modulation symbols that are in the second modulation scheme and that are respectively corresponding to the N users by mixing $k^{th}$ modulation symbols in all symbol sequences in the first modulation scheme, wherein
      c2) k is an integer greater than 0 and less than or equal to M, and M is a quantity of the modulation symbols in all symbol sequences in the first modulation scheme, and each of the N modulation symbols in the second modulation scheme comprises information about the $k^{th}$ modulation symbol in each symbol sequence in the first modulation scheme, and the N modulation symbols in the second modulation scheme are respectively the $k^{th}$ modulation symbols in the N symbol sequences in the second modulation scheme.

2. The information sending method according to claim 1, wherein the processing of the separately sending (S204) the N symbol sequences in the second modulation scheme to the N users comprises:
   respectively mapping the N modulation symbols in the second modulation scheme to $k^{th}$ subcarriers in the resource blocks that are corresponding to the N users for sending.

3. The information sending method according to claim 1, wherein the processing of the mixing the $k^{th}$ modulation symbols in all symbol sequences in the first modulation scheme comprises:
multiplying a predetermined matrix by a matrix that is formed by the $k^{th}$ modulation symbols in all symbol sequences in the first modulation scheme.

4. The information sending method according to claim 3, wherein the predetermined matrix is determined based on the quantity N of the users, and the first modulation scheme.

5. The information sending method according to claim 4, wherein the first modulation scheme is phase shift keying modulation.

6. The information sending method according to claim 4, wherein the first modulation scheme is quadrature amplitude modulation.

7. The information sending method according to claim 1, further comprising:
generating the N symbol sequences in the first modulation scheme by performing coding, interleaving, and modulation on information that is respectively corresponding to the N users.

8. An information sending apparatus, comprising:

a) a mixing unit, configured to generate (S206, S202), based on N symbol sequences that are in a first modulation scheme and that are respectively corresponding to N users, N symbol sequences that are in a second modulation scheme and that are respectively corresponding to the N users, wherein N is an integer greater than 1, each symbol sequence in the second modulation scheme comprises information about the N symbol sequences in the first modulation scheme, and the second modulation scheme is a higher order modulation scheme than the first modulation scheme; and
b) a sending unit, configured to separately send (S204) the N symbol sequences in the second modulation scheme to the N users by using resource blocks that are respectively corresponding to the N users;
c1) wherein the mixing unit is configured to generate N modulation symbols that are in the second modulation scheme and that are respectively corresponding to the N users by mixing $k^{th}$ modulation symbols in all symbol sequences in the first modulation scheme, wherein
c2) k is an integer greater than 0 and less than or equal to M, and M is a quantity of the modulation symbols in all symbol sequences in the first modulation scheme, and each of the N modulation symbols in the second modulation scheme comprises information about the $k^{th}$ modulation symbol in each symbol sequence in the first modulation scheme, and the N modulation symbols in the second modulation scheme are respectively the $k^{th}$ modulation symbols in the N symbol sequences in the second modulation scheme.

9. The information sending apparatus according to claim 8, wherein the sending unit is configured to respectively map the N modulation symbols in the second modulation scheme to $k^{th}$ subcarriers in the resource blocks that are corresponding to the N users for sending

10. The information sending apparatus according to claim 8, wherein the mixing unit is configured to mix the $k^{th}$ modulation symbols in all symbol sequences in the first modulation scheme by multiplying a predetermined matrix by a matrix that is formed by the $k^{th}$ modulation symbols in all symbol sequences in the first modulation scheme.

11. The information sending apparatus according to claim 10, wherein the mixing unit is further configured to determine the predetermined matrix based on the quantity N of the users, and the first modulation scheme.

12. The information sending apparatus according to claim 11, wherein the first modulation scheme is phase shift keying modulation.

13. The information sending apparatus according to claim 11, wherein the first modulation scheme is quadrature amplitude modulation.

14. The information sending apparatus according to claim 8, further comprising:
a coding and modulation unit, configured to generate the N symbol sequences in the first modulation scheme by performing coding, interleaving, and modulation on information that is respectively corresponding to the N users.

**Patentansprüche**

1.  Informationssendeverfahren, umfassend:

    a) Erzeugen (S206, S202), basierend auf N Symbolsequenzen, die sich in einem ersten Modulationsschema befinden und die jeweils N Benutzern entsprechen, von N Symbolsequenzen, die sich in einem zweiten Modulationsschema befinden und die jeweils N Benutzern entsprechen, wobei N eine ganze Zahl größer als 1 ist, jede Symbolsequenz in dem zweiten Modulationsschema Informationen über die N Symbolsequenzen in dem ersten Modulationsschema umfasst und das zweite Modulationsschema ein Modulationsschema höherer Ordnung als das erste Modulationsschema ist; und
    b) getrenntes Senden (S204) der N Symbolsequenzen in dem zweiten Modulationsschema an die N Benutzer durch Verwenden von Ressourcenblöcken, die jeweils den N Benutzern entsprechen; und
    c) wobei ein Verarbeiten des Erzeugens, basierend auf N Symbolsequenzen, die sich in einem ersten Modulationsschema befinden, von N Symbolsequenzen, die sich in einem zweiten Modulationsschema befinden, umfasst:

    c1) Erzeugen von N Modulationssymbolen, die sich in dem zweiten Modulationsschema befinden und die jeweils den N Benutzern entsprechen, durch Mischen von $k^{ten}$ Modulationssymbolen in allen Symbolsequenzen in dem ersten Modulationsschema, wobei
    c2) k eine ganze Zahl größer als 0 und kleiner oder gleich M ist und M eine Anzahl der Modulationssymbole in allen Symbolsequenzen in dem ersten Modulationsschema ist und jedes der N Modulationssymbole in dem zweiten Modulationsschema Informationen über das $k^{te}$ Modulationssymbol in jeder Symbolsequenz in dem ersten Modulationsschema umfasst und die N Modulationssymbole in dem zweiten Modulationsschema jeweils die $k^{ten}$ Modulationssymbole in den N Symbolsequenzen in dem zweiten Modulationsschema sind.

2.  Informationssendeverfahren nach Anspruch 1, wobei das Verarbeiten des getrennten Sendens (S204) der N Symbolsequenzen in dem zweiten Modulationsschema an die N Benutzer umfasst:
    jeweils Zuordnen der N Modulationssymbole in dem zweiten Modulationsschema zu $k^{ten}$ Hilfsträgern in den Ressourcenblöcken, die den N Benutzern zum Senden entsprechen.

3.  Informationssendeverfahren nach Anspruch 1, wobei das Verarbeiten des Mischens der $k^{ten}$ Modulationssymbole in allen Symbolsequenzen in dem ersten Modulationsschema umfasst:
    Multiplizieren einer vorbestimmten Matrix mit einer Matrix, die durch die $k^{ten}$ Modulationssymbole in allen Symbolsequenzen in dem ersten Modulationsschema gebildet wird.

4.  Informationssendeverfahren nach Anspruch 3, wobei die vorbestimmte Matrix basierend auf der Anzahl N der Benutzer und dem ersten Modulationsschema bestimmt wird.

5.  Informationssendeverfahren nach Anspruch 4, wobei das erste Modulationsschema eine Phasenumtastungsmodulation ist.

6.  Informationssendeverfahren nach Anspruch 4, wobei das erste Modulationsschema eine Quadraturamplitudenmodulation ist.

7.  Informationssendeverfahren nach Anspruch 1, ferner umfassend:
    Erzeugen der N Symbolsequenzen in dem ersten Modulationsschema durch Ausführen von Codieren, Verschachteln und Modulation an Informationen, die jeweils den N Benutzern entsprechen.

8.  Informationssendevorrichtung, umfassend:

    a) eine Mischeinheit, die konfiguriert ist, um, basierend auf N Symbolsequenzen, die sich in einem ersten Modulationsschema befinden und die jeweils N Benutzern entsprechen, N Symbolsequenzen zu erzeugen (S206, S202), die sich in einem zweiten Modulationsschema befinden und die jeweils den N Benutzern entsprechen, wobei N eine ganze Zahl größer als 1 ist, jede Symbolsequenz in dem zweiten Modulationsschema Informationen über die N Symbolsequenzen in dem ersten Modulationsschema umfasst und das zweite Modulationsschema ein Modulationsschema höherer Ordnung als das erste Modulationsschema ist; und

b) eine Sendeeinheit, die konfiguriert ist, um die N Symbolsequenzen in dem zweiten Modulationsschema an die N Benutzer durch Verwenden von Ressourcenblöcken, die jeweils den N Benutzern entsprechen, getrennt zu senden (S204);

c1) wobei die Mischeinheit konfiguriert ist, um N Modulationssymbole, die sich in dem zweiten Modulationsschema befinden und die jeweils den N Benutzern entsprechen, durch Mischen von $k^{ten}$ Modulationssymbolen in allen Symbolsequenzen in dem ersten Modulationsschema zu erzeugen, wobei

c2) k eine ganze Zahl größer als 0 und kleiner oder gleich M ist und M eine Anzahl der Modulationssymbole in allen Symbolsequenzen in dem ersten Modulationsschema ist und jedes der N Modulationssymbole in dem zweiten Modulationsschema Informationen über das $k^{te}$ Modulationssymbol in jeder Symbolsequenz in dem ersten Modulationsschema umfasst und die N Modulationssymbole in dem zweiten Modulationsschema jeweils die $k^{ten}$ Modulationssymbole in den N Symbolsequenzen in dem zweiten Modulationsschema sind.

9. Informationssendevorrichtung nach Anspruch 8, wobei die Sendeeinheit konfiguriert ist, um die N Modulationssymbole in dem zweiten Modulationsschema jeweils $k^{ten}$ Hilfsträgern in den Ressourcenblöcken zuzuordnen, die den N Benutzern zum Senden entsprechen

10. Informationssendevorrichtung nach Anspruch 8, wobei die Mischeinheit konfiguriert ist, um die $k^{ten}$ Modulationssymbole in allen Symbolsequenzen in dem ersten Modulationsschema durch Multiplizieren einer vorbestimmten Matrix mit einer Matrix zu mischen, die durch die $k^{ten}$ Modulationssymbole in allen Symbolsequenzen in dem ersten Modulationsschema gebildet wird.

11. Informationssendevorrichtung nach Anspruch 10, wobei die Mischeinheit ferner konfiguriert ist, um die vorbestimmte Matrix basierend auf der Anzahl N der Benutzer und dem ersten Modulationsschema zu bestimmen.

12. Informationssendevorrichtung nach Anspruch 11, wobei das erste Modulationsschema eine Phasenumtastungsmodulation ist.

13. Informationssendevorrichtung nach Anspruch 11, wobei das erste Modulationsschema eine Quadraturamplitudenmodulation ist.

14. Informationssendevorrichtung nach Anspruch 8, ferner umfassend:
eine Codierungs- und Modulationseinheit, die konfiguriert ist, um die N Symbolsequenzen in dem ersten Modulationsschema durch Ausführen von Codieren, Verschachteln und Modulation an Informationen zu erzeugen, die jeweils den N Benutzern entsprechen.

**Revendications**

1. Procédé d'envoi d'informations, comprenant :

a) la génération (S206, S202), sur la base de N séquences de symboles qui sont dans un premier système de modulation et qui correspondent respectivement à N utilisateurs, de N séquences de symboles qui sont dans un second système de modulation et qui correspondent respectivement aux N utilisateurs, N étant un entier supérieur à 1, chaque séquence de symboles dans le second système de modulation comprenant des informations concernant les N séquences de symboles dans le premier système de modulation, et le second système de modulation étant un système de modulation d'ordre supérieur à celui du premier système de modulation ; et
b) l'envoi séparé (S204) des N séquences de symboles dans le second système de modulation aux N utilisateurs en utilisant des blocs de ressources qui correspondent respectivement aux N utilisateurs ; et
c) le traitement de la génération, sur la base de N séquences de symboles qui sont dans un premier système de modulation, de N séquences de symboles qui sont dans un second système de modulation comprenant :

c1) la génération de N symboles de modulation qui sont dans le second système de modulation et qui correspondent respectivement aux N utilisateurs en mélangeant des $k^{èmes}$ symboles de modulation dans toutes les séquences de symboles dans le premier système de modulation,
c2) k étant un entier supérieur à 0 et inférieur ou égal à M, et M étant une quantité des symboles de modulation dans toutes les séquences de symboles dans le premier système de modulation, et chacun des N symboles de modulation dans le second système de modulation comprenant des informations concernant le $k^{ème}$ symbole de modulation dans chaque séquence de symboles dans le premier système de modulation, et les N symboles de modulation dans le second système de modulation étant respectivement les $k^{èmes}$ symboles de modulation dans les N séquences de symboles dans le second système de modulation.

2. Procédé d'envoi d'informations sein la revendication 1, le traitement de l'envoi séparé (S204) des N séquences de symboles dans le second système de modulation aux N utilisateurs comprenant :
la mise en correspondance respective des N symboles de modulation dans le second système de modulation avec des $k^{èmes}$ sous-porteuses dans les blocs de ressources qui correspondent aux N utilisateurs en vue d'un envoi.

3. Procédé d'envoi d'informations selon la revendication 1, le traitement du mélange des $k^{èmes}$ symboles de modulation dans toutes les séquences de symboles dans le premier système de modulation comprenant :
la multiplication d'une matrice prédéterminée par une matrice qui est formée par les $k^{èmes}$ symboles de modulation dans toutes les séquences de symboles dans le premier système de modulation.

4. Procédé d'envoi d'informations selon la revendication 3, la matrice prédéterminée étant déterminée sur la base de la quantité N des utilisateurs, et du premier système de modulation.

5. Procédé d'envoi d'informations selon la revendication 4, le premier système de modulation étant une modulation par déplacement de phase.

6. Procédé d'envoi d'informations selon la revendication 4, le premier système de modulation étant une modulation d'amplitude en quadrature.

7. Procédé d'envoi d'informations selon la revendication 1, comprenant en outre :
la génération des N séquences de symboles dans le premier système de modulation en réalisant un codage, un entrelacement et une modulation sur des informations qui correspondent respectivement aux N utilisateurs.

8. Appareil d'envoi d'informations, comprenant :

   a) une unité de mélange, configurée pour générer (S206, S202), sur la base de N séquences de symboles qui sont dans un premier système de modulation et qui correspondent respectivement à N utilisateurs, N séquences de symboles qui sont dans un second système de modulation et qui sont respectivement correspondant aux N utilisateurs, N étant un entier supérieur à 1, chaque séquence de symboles dans le second système de modulation comprenant des informations concernant les N séquences de symboles dans le premier système de modulation, et le second système de modulation étant un système de modulation d'ordre supérieur à celui du premier système de modulation ; et
   b) une unité d'envoi, configurée pour envoyer séparément (S204) les N séquences de symboles dans le second système de modulation aux N utilisateurs en utilisant des blocs de ressources qui correspondent respectivement aux N utilisateurs ;
   c1) l'unité de mélange étant configurée pour générer N symboles de modulation qui sont dans le second système de modulation et qui correspondent respectivement aux N utilisateurs en mélangeant des $k^{èmes}$ symboles de modulation dans toutes les séquences de symboles dans le premier système de modulation,
   c2) k étant un entier supérieur à 0 et inférieur ou égal à M, et M étant une quantité des symboles de modulation dans toutes les séquences de symboles dans le premier système de modulation, et chacun des N symboles de modulation dans le second système de modulation comprenant des informations concernant le $k^{ème}$ symbole de modulation dans chaque séquence de symboles dans le premier système de modulation, et les N symboles de modulation dans le second système de modulation étant respectivement les $k^{èmes}$ symboles de modulation dans les N séquences de symboles dans le second système de modulation.

9. Appareil d'envoi d'informations selon la revendication 8, l'unité d'envoi étant configurée pour mettre respectivement les N symboles de modulation dans le second système de modulation en correspondance avec des $k^{èmes}$ sous-porteuses dans les blocs de ressources qui correspondent aux N utilisateurs en vue d'un envoi.

10. Appareil d'envoi d'informations selon la revendication 8, l'unité de mélange étant configurée pour mélanger les $k^{èmes}$ symboles de modulation dans toutes les séquences de symboles du premier système de modulation en multipliant une matrice prédéterminée par une matrice qui est formée par les $k^{èmes}$ symboles de modulation dans toutes les séquences de symboles dans le premier système de modulation.

11. Appareil d'envoi d'informations selon la revendication 10, l'unité de mélange étant en outre configurée pour déterminer la matrice prédéterminée sur la base de la quantité N des utilisateurs, et du premier système de modulation.

12. Appareil d'envoi d'informations selon la revendication 11, le premier système de modulation étant une modulation par déplacement de phase.

13. Appareil d'envoi d'informations selon la revendication 11, le premier système de modulation étant une modulation d'amplitude en quadrature.

14. Appareil d'envoi d'informations selon la revendication 8, comprenant en outre :
une unité de codage et de modulation, configurée pour générer les N séquences de symboles dans le premier système de modulation en réalisant un codage, un entrelacement et une modulation sur des informations qui correspondent respectivement aux N utilisateurs.

FIG. 1a

EP 3 493 452 B1

FIG. 1b

```
┌─────────────────────────────────────────────────────────┐
│   Generate the N symbol sequences in the first modulation scheme      │ ─── S206
│ by performing coding, interleaving, and modulation on information     │
│           that is respectively corresponding to the N users           │
└─────────────────────────────────────────────────────────┘
```

↓

```
┌─────────────────────────────────────────────────────────┐
│         Generate, based on N symbol sequences that are in a first      │
│     modulation scheme and that are respectively corresponding to N     │
│    users, N symbol sequences that are in a second modulation scheme    │
│    and that are respectively corresponding to the N users, where N is  │ ─── S202
│       an integer greater than 1, each symbol sequence in the second    │
│        modulation scheme includes information about the N symbol       │
│           sequences in the first modulation scheme, and the second     │
│      modulation scheme is a higher order modulation scheme than the    │
│                         first modulation scheme                        │
└─────────────────────────────────────────────────────────┘
```

↓

```
┌─────────────────────────────────────────────────────────┐
│   Separately send the N symbol sequences in the second modulation      │ ─── S204
│       scheme to the N users by using resource blocks that are          │
│           respectively corresponding to the N users                    │
└─────────────────────────────────────────────────────────┘
```

FIG. 2

EP 3 493 452 B1

$$\begin{bmatrix} s_1^{'}(k) \\ s_2^{'}(k) \end{bmatrix} = Q \begin{bmatrix} s_1(k) \\ s_2(k) \end{bmatrix} = \frac{1}{\sqrt{2}} \begin{bmatrix} 1 & j \\ 1 & \pm j \end{bmatrix} \begin{bmatrix} s_1(k) \\ s_2(k) \end{bmatrix}$$

FIG. 3

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101447854 A
- US 2010232348 A
- US 20080101491 A1